# EUROPEAN PATENT SPECIFICATION

(11) **EP 3 772 446 B1**
(45) Date of publication and mention of the grant of the patent: **16.06.2021**
(21) Application number: 19382704.5
(22) Date of filing: 09.08.2019
(51) Int. Cl.: B62D 27/04, B62D 27/02, B62D 31/00, B62D 33/04, B64C 1/06, B64C 1/18, B64C 1/40

(54) **ASSEMBLY SYSTEM**
MONTAGESYSTEM
SYSTÈME D'ASSEMBLAGE

(43) Date of publication of application: 10.02.2021
(73) Proprietor: ANSITEC Soluciones de Ingeniería e Informática, S.L., 50197 Zaragoza (ES)
(72) Inventor: CALVO LAUSÍN, Francisco Javier, 50197 ZARAGOZA (ES); LUIS ASCASO, Jose Antonio, 50197 ZARAGOZA (ES)
(74) Representative: Ungria López, Javier

(56) References cited:
- EP-A1- 0 645 299
- EP-A1- 1 090 830
- WO-A1-01/74649
- GB-A- 923 668
- KR-B1- 101 507 741
- US-A- 3 538 667
- US-A- 5 036 586
- US-A1- 2013 164 094

## Description

### Technical field of the invention

The technical field of the invention is that of transportation, both of goods and of people. More specifically, it falls into the construction of all types of transport vehicles.

The object of the invention is to provide support and anchoring surfaces with the appropriate geometric requirements for assembling the coverings (floor, walls and ceiling) on the structures of the vehicles, meeting the safety and comfort requirements required for the use and maintenance thereof. Likewise complies with the binding regulations of these vehicles. It also aims to facilitate the installation of vehicle components that must necessarily be arranged between the frames and the coverings thereof.

### Background of the invention

At present during the process of building vehicles and especially those of large dimensions such as trains, buses, aircraft, ships, etc., the frames or chassis provide support surfaces or points that must be covered for later use by the passengers or for cargo loading. With said coverings, flatness is provided on the floor to enable mobility inside the vehicle. Likewise, the geometric continuity needed in the rest of the faces is provided in order to perform the enclosure with finishing materials that provide the assembly with acoustic insulation, thermal insulation, comfort and ease of use and maintenance, and, of course, safety for passengers and transported goods.

The structural frames of vehicles usually present a series of irregularities due to the different manufacturing and assembly processes. This occurs especially in the case of welds, which require a process of adjustment when assembling the finishing materials mentioned above.

Prior to the installation processes of any type of covering, whether floors, walls or ceilings, the arrangement of a series of support surfaces or points is required on which the panels of the covering can be securely attached. This is necessary in order to provide and maintain the geometric continuity needed throughout the cycle of use of the vehicle which is subjected to the maximum loads declared by the manufacturer.

The arrangement of the coverings on the frames often requires the creation of chambers, with a very specific thickness, for the arrangement of insulation and installations for different vehicle systems (air conditioning, sensorisation, etc.).

The main methods currently used for providing the supports for the coverings on the vehicle frames at the necessary level consist of the precise forming or machining of the frames, the arrangement of adjustment shims and assembly of fillets of different materials and lengths, or levelling by chemical components such as polyurethane. The method for attaching the entire set of materials is usually carried out by gluing, and/or by mechanical attachment (screwed or riveted to the main frame). In cases where levelling is carried out by inserting shims and polyurethane, there is also an assembly version that includes an anti-vibration block (silent block) to improve comfort.

The methods described above present a series of difficulties when it comes to precisely adjusting the materials:
- They are expensive in terms of assembly and adjustment times.
- They involve a large number of elements with different measurements, used to achieve the desired surfaces, such that the manufacturing, as well as the logistics processes thereof are more expensive.
- In the case of gluing and reinforcement processes using chemical materials, curing times during which it is not possible to work on said surfaces must be taken into account, in addition to the risk entailed by certain chemical products when they are used in terms of toxicity and fouling of materials and tools.
- The methods of assembly by gluing hinder the subsequent disassembly which can be requested in the cycle of use of the product to maintain, assemble and replace components due to different causes.
- The attachment systems for attaching the coverings often do not achieve sufficient acoustic, thermal and vibration insulation, which are transmitted from the outside through the frame and the attachment elements thereof.

It is known from document GB 923668 A to provide supports for vehicle roofs which comprise a structural member which bridges an outer panel and inner panels of a road vehicle and comprise a U-shaped member having flanges projecting outwardly and inwardly where they form abutments for securing panel retaining members. The sides of the U-shaped member may be parallel and two similar shaped U members may be joined back-to-back or the basis of these two members may form two sides of a rectangular strut.

### General description of the invention

The present invention describes an assembly system for vehicle coverings which provides a solution in the industrial sector of the construction of all types of transport vehicles. The structures of vehicles are the support for the coverings (finishing surfaces of floor, ceiling, walls, etc.) necessary for use in transporting passengers and goods in order to be able to perform the function thereof safely and comfortably. The assembly of the coverings on the frames requires a series of support surfaces and elements for the levelling and secure attachment thereof to the same.

As previously described, nowadays in the processes used for assembling coverings (positioning, levelling and secure attachment), profiles and support plates that are levelled by shims (sheets of different thickness) are mostly used. Said processes are costly in assembly times, employ a significant number of elements and references and often require the use of chemicals for gluing and reinforcing the coverings.

The object of the invention is to provide in a simple manner support and anchoring surfaces with the appropriate requirements for assembling the coverings (floor, walls and ceiling) on vehicle structures, meeting the safety and comfort requirements for the use and maintenance thereof. It also aims to facilitate the installation and maintainability of vehicle components and installations that necessarily have to be arranged between the frames and the coverings thereof (insulation chamber).

Thus, the assembly system of the present invention enables the fitted assembly of the coverings on the structural frame of a vehicle by using a profile substructure equipped with support and levelling elements (levelling supports) which enable quick assembly and disassembly. The components of the system are standardised to adapt to different projects and do not require the use of adjustment shims or levelling by adding chemical products for the attachment and structural resistance thereof.

Thus, the components of the system can be adapted to the geometry and technical requirements of each assembly, increasing the efficiency of the manufacturing and assembly processes of the components thereof. It also enables the surface adjustment thereof to be controlled at all times, in a simple way, therefore reducing the number of components and times and the cost of assembly and adjustment.

Depending on the arrangement thereof in the vehicle frame, the assembly system meets the manufacturing requirements of the vehicle for each case (surface geometry, load resistance, insulation, etc.), also facilitating the attachment of components of other systems between the frame and coverings. It is important to indicate that all the elements form part of a system that works integrally in the assembly, levelling and distribution of the uniform loads on the vehicle structure.

The system enables the levelled support of the coverings, the uniform distribution of the support points on the vehicle frame and therefore, of the loads applied to it. The whole system works integrally.

The assembly system comprises a plurality of profiles made by the extrusion of a metal alloy (treated aluminium), or composite, which is based on the load and fire and smoke protection requirements required for said materials. The profiles have an exclusive cross section that enables, on the one hand, the insertion of support and levelling elements (levelling supports) with respect to the structural frame, and on the other hand, the insertion of elements for the joining of several profiles and other components (joining accessories) that form the covering and auxiliary installations located therein.

The profiles have a series of holes that enable the supports thereof to be quickly attached to the frame after adjustment. An important feature is the low profile height that enables the interior volume of the vehicles to be used as much as possible.

The levelling supports are used to level the entire assembly, which is achieved by means of a levelling screw, connected to a threaded insert, which has at one of the ends thereof a support element for attaching by mechanical means (screwed or riveted) to the structural frame of the vehicle. The relative displacement between the levelling screw and the threaded insert enables the height of the supports and therefore of the covering to be adjusted with respect to the frame. Each support can be levelled independently to counteract possible mechanical irregularities of the frame.

It can also comprise an anti-vibration element, which can be an elastomer component, located between the profile and the covering and between the profile and the levelling support and which purpose is to act as an insulator of vibrations, noise and thermal bridge between the outside and the inside of the vehicle.

Some of the advantages of the assembly system of the present invention are the following:
- It enables practicable coverings to be designed in order to better maintain the same and the installations interposed between them and the vehicle frame.
- It provides significant savings of assembly and adjustment times, since it enables a standardised assembly and fitting of the elements thereof.
- Reduction of elements used to achieve the desired surfaces and, consequently, of the associated manufacturing and logistics costs and times.
- Elimination of waiting times in the assembly due to the curing of the adhesives that support the loads of the coverings (floor).
- Reduction of the toxic risk involved in the use of certain chemical products, as well as the times for degreasing the frame and cleaning the tools.
- It enables an insulation chamber having reduced thickness to be maintained between the coverings and the frame, applying acoustic, thermal and vibration insulation materials to prevent the same from being transmitted from the outside through the frame and the attachment elements.

### Brief description of the figures

To complete the description, and for the purpose of helping to make the features of the invention more readily understandable, this description is accompanied by a set of drawings constituting an integral part of the same, which by way of illustration and not limitation represents the following:
Figure 1A shows an assembly of the state of the art by means of shimmed aluminium profiles.
Figure 1B shows an assembly of the state of the art, similar to that of Figure 1A which further comprises an anti-vibration block.
Figure 2 shows a profile of the assembly system.
Figure 3A shows a levelling support of the assembly system.
Figure 3B shows an exploded view of the levelling support of Figure 3A.
Figure 3C shows a view of the levelling support of Figure 3A in an embodiment in which the assembly system comprises anti-vibration elements.
Figure 4 shows a cross-sectional view of the assembly system joined to the vehicle frame and with the covering, in this case a floor, arranged on the assembly system.
Figure 5 shows a view of two profiles, joined together by means of a joining accessory, which is also part of the assembly system, and where the access opening to the levelling support can be observed.
Figure 6 shows the assembly system with a plurality of profiles and levelling supports, with the profiles already joined together, and the system already being level, ready to be joined to the vehicle frame.
Figure 7 shows the assembly system on an aluminium vehicle frame, with the covering already placed on top of the assembly system. It shows the free space for insulation and auxiliary installations between the frame and the covering.
Figure 8 shows the assembly system arranged on a steel vehicle frame, with the covering already placed on top of the assembly system.
Figure 9 shows a profile of the assembly system, with a levelling support, joined to the frame of a vehicle.
Figure 10 shows the joining of two profiles of the assembly system by means of a joining accessory, arranged in correspondence, in this case, with a levelling support.

Below, a list is provided of the different elements represented in the figures making up the invention:
- 1.: Frame
- 2.: Covering
- 3.: Aluminium profile of the state of the art
- 4.: Shims of the state of the art
- 5.: Anti-vibration block of the state of the art
- 6.: Profile
- 7.: Main housing
- 8.: Lateral housing
- 9.: Profile end
- 10.: Levelling support
- 11.: Joining accessory
- 12.: Anti-vibration element
- 13.: Upper housing
- 14.: Opening
- 15.: Base
- 16.: Levelling screw
- 17.: Plate
- 18.: Threaded insert

### Detailed description of the invention

The present invention should not be limited by the embodiment described herein. Other configurations may be carried out by those skilled in the art based on the present description.

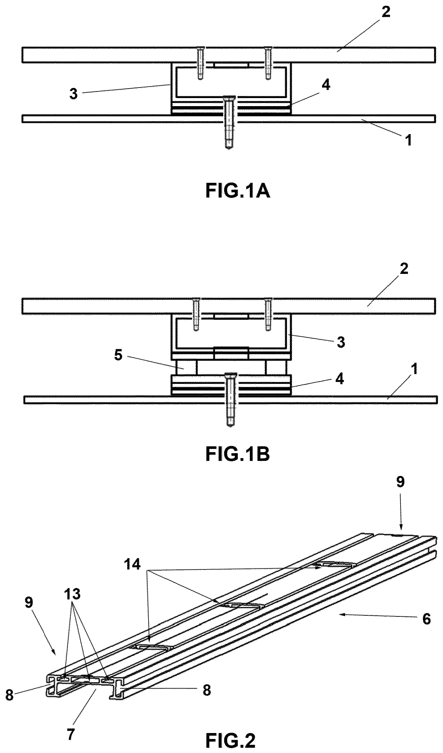

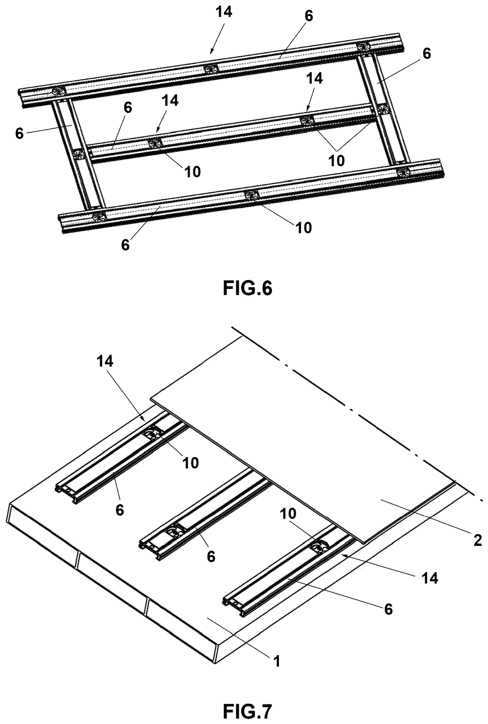

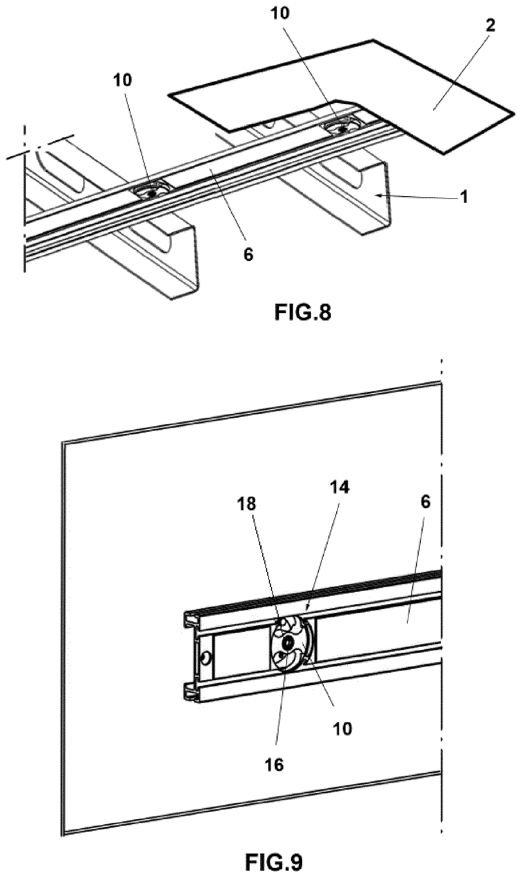

The proposed assembly system can be applied to different types of vehicle frames and enables the problems of currently known solutions, such as the one shown in Figures 1A-B, to be solved. The assembly system of the invention is shown in Figures 2 to 10 and, more specifically, in Figure 7 it is shown joined to an aluminium frame, and in Figure 8 joined to a steel frame.

Figures 1A-B show some assembly solutions of the state of the art arranged between the frame (1) and the covering (2) of a vehicle. In both cases an aluminium profile (3) and levelling shims (4) have been used. In addition, in the solution of Figure 1B it was necessary to place an anti-vibration block (silent block) (5).

The assembly system is configured to be arranged between the frame (1) of a vehicle and the covering (2) thereof, joined to both, creating an insulation chamber therebetween. The system comprises a plurality of profiles (6), as shown in Figure 2, configured to be joined to the covering (2). Said profiles (6) comprise a main housing (7) and at least one lateral housing (8), arranged on one side of the main housing (7), which extend longitudinally between ends (9).

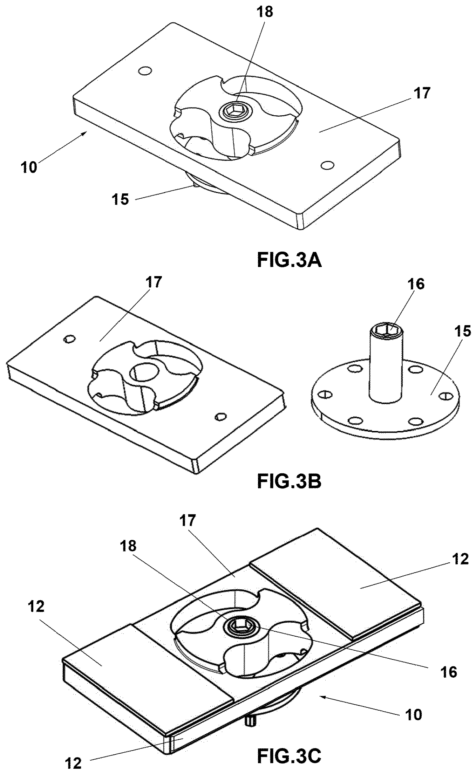

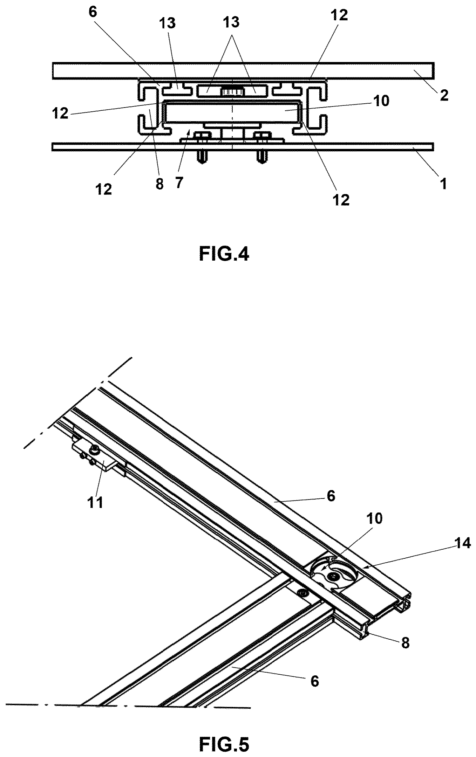

Moreover, the system comprises a plurality of levelling supports (10), as shown in Figures 3A-C, which are height adjustable. Said levelling supports (10) are partially housed in the main housing (7) of the profiles (6) and configured to be joined to the frame (1) as can be seen in Figure 5. By adjusting the height of the levelling supports (10), the profiles (6) joined thereto move away from or closer to the frame (1), the covering (2) moving away from or closer to said frame (1). In addition, each levelling support (10) can be adjusted independently, ensuring equal levelling of all points of the covering (2). Adapting the height of each levelling support (10) according to the specific point of the frame (1) on which it is positioned corrects any possible geometric defect, so that, if there are any, they are not noticed inside the vehicle.

The assembly system also comprises joining accessories (11) partially housed in the lateral housing (8) of a profile (6) and partially housed in one end (9) of a profile (6) in order to join both profiles (6) perpendicularly to each other. In Figure 5 a first profile (6) can be seen with a joining accessory (11) that is not being used, and with another joining accessory (11) that is not visible in the figure because it is being used to join a second profile (6) to said first profile (6).

It is through the joining accessories (11) that the profiles (6) of the system are combined to form different structures (such as rectangles as shown in Figure 6) depending on the resistance and placement needs of necessary equipment and installations of the vehicle. Preferably, the attachment of the joining accessories (11) to the profiles (6) is carried out by means of screws as can be seen for example in Figure 5.

The use of a patchwork of transverse and longitudinal profiles (6), as in Figure 6, facilitates the positioning and levelling of the assembly system, as well as the distribution of loads on the vehicle frame (1). Boxes of different dimensions can be formed to house auxiliary equipment and installations. In an exemplary embodiment, the profile (6) comprises longitudinal grooves in the housings. These elements are movable along the housings guided by the grooves. In addition, auxiliary equipment and installations can be fixed in the grooves of the profiles (6), generally in the grooves of the lateral housings (8).

The system may comprise at least one anti-vibration element (12), joined to the levelling supports (10) and configured to be arranged between said levelling supports (10) and the profile (6), as shown in Figure 3C. In another exemplary embodiment, the anti-vibration element or elements may be joined to the profiles (6) and configured to be arranged between said profiles (6) and the covering (2). An example is shown in Figure 4 in which the system comprises anti-vibration elements (12) between the profile (6) and the covering (2) and between the profile (6) and the levelling support (10). Preferably, the anti-vibration element (12) is a layer of elastomer material.

The profiles (6) comprise at least one upper housing (13), arranged on the main housing (7) and/or on the at least one lateral housing (8), configured to enable the profile (6) to be joined to the covering (2) by mechanical means. Said joining can be carried out, for example, by self-tapping screws or by means of screws that can be fitted in the upper housings (13).

In the embodiment shown in the figures, the profiles (6) comprise three upper housings (13) and two lateral housings (8) so that an upper housing (13) is arranged on each lateral housing (8) and another upper housing (13) on the main housing (7).

Preferably, the profiles (6) comprise access openings (14), arranged along the profile (6) and which pass through the profile (6), and the levelling supports (10) are arranged in the profile (6) in correspondence with said access openings (14). These access openings (14) enable the user who places the assembly system to adjust the height of the levelling supports (10) in a simple way, as they provide direct access to said levelling supports (10). Figures 5 to 10 show how the levelling supports (10) are arranged with respect to the access openings (14), ensuring a comfortable and easy placement of the assembly system and considerable savings in time.

In a possible embodiment of the invention, the levelling supports (10) comprise a base piece (15) intended to be joined to the vehicle frame (1) and comprising a levelling screw (16). The levelling screw (16) can have different lengths depending on the application for which it is to be used and depending on the thickness of the insulation chamber that is to be left between the frame (1) and covering (2) in the vehicle.

They also comprise a plate (17) that is movably joined to the base piece (15) by means of a threaded insert (18) and the levelling screw (16) such that the displacement is made in the longitudinal direction of the levelling screw (16). An exploded view of this particular embodiment is shown in Figure 3B. In an exemplary embodiment, the plate (17) is made of a fire and smoke resistant polymer material according to applicable regulations.

Preferably, the main housing (7) has height and width measurements adapted to the measurements of the plate (17) of the levelling supports (10) joined to the anti-vibration elements (12). In a more specific embodiment, the main housing (7) has height and width measurements adapted to the measurements of the plate (17) of the levelling supports (10).

Figure 7 shows the assembly system joined to an aluminium frame (1), while Figure 8 shows the assembly system joined to a steel frame (1).

The installation process of the assembly system on the vehicle frame (1) is very quick and comprises the following steps:
1. Positioning the profiles (6) (with the levelling supports (10) already assembled thereon) on the frame (1).
2. Levelling the assembly system by rotating the levelling screws (16) of the levelling supports (10).
3. Attaching the assembly system by means of self-tapping screws or rivets to the vehicle frame (1), as can be seen in Figure 9.
4. Assembling the coverings (2) on the assembly system.

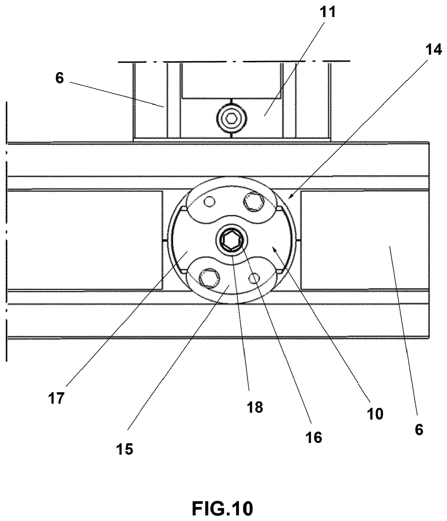

Figure 10 shows the joining area between two profiles (6) and a joining accessory (11) can be seen. In this case, the joint between the two profiles (6) has been made next to an opening (14) of one of the profiles (6) and the levelling support (10) can be seen. Through the opening (14) there is access to the levelling screw (16) and the threaded insert (18) in order to adjust the height of the assembly as described in step 2 above.

## Claims

1. An assembly system configured to be arranged between the frame (1) of a vehicle and the covering (2) thereof, joined to both, creating therebetween an insulation chamber, **characterised in that** it comprises:
- a plurality of profiles (6) configured to be joined to the covering (2) and comprising a main housing (7) and at least one lateral housing (8), arranged on one side of the main housing (7), which extend longitudinally between ends (9);
- a plurality of levelling supports (10) that are height adjustable and are partially housed in the main housing (7) of the profiles (6) and configured to be joined to the frame (1) such that, by adjusting the height of said levelling supports (10), the profiles (6) move away from or closer to the frame (1),
- joining accessories (11) partially housed in the lateral housing (8) of a profile (6) and partially housed in one end (9) of another profile (6) in order to join both profiles (6) perpendicularly to each other.

2. The assembly system according to claim 1, **characterised in that** it comprises at least one anti-vibration element (12), joined to the levelling supports (10) and configured to be arranged between said levelling supports (10) and the profile (6), and/or joined to the profiles (6) and configured to be arranged between said profiles (6) and the covering (2).

3. The assembly system according to claim 2, **characterised in that** the anti-vibration element (12) is a layer of elastomer material.

4. The assembly system according to any one of the preceding claims, **characterised in that** the profiles (6) comprise at least one upper housing (13), arranged on the main housing (7) and/or on the at least one lateral housing (8), configured to enable the joint between the profile (6) and the covering (2) by mechanical means.

5. The assembly system according to any one of the preceding claims, **characterised in that** the profiles (6) comprise access openings (14), arranged along the profile (6) and which pass through the profile (6), and the levelling supports (10) are arranged in the profile (6) in correspondence with said access openings (14).

6. The assembly system according to any one of the preceding claims, **characterised in that** the levelling supports (10) comprise:
- a base piece (15) intended to be joined to the vehicle frame (1) and comprising a levelling screw (16);
- a plate (17) that is movably joined to the base piece (15) by means of a threaded insert (18) and the levelling screw (16) such that the displacement is made in the longitudinal direction of the levelling screw (16).

7. The assembly system according to any one of claims 2 to 6, **characterised in that** the main housing (7) has height and width measurements adapted to the measurements of the plate (17) of the levelling supports (10) joined to the anti-vibration elements (12).

8. The assembly system according to any one of the preceding claims, **characterised in that** the profile (6) comprises longitudinal grooves in the housings.

9. The assembly system according to any one of the preceding claims, **characterised in that** the attachment of the joining accessories (11) to the profiles (6) is carried out by means of screws.

## Patentansprüche

1. Montagesystem, das dazu ausgelegt ist, zwischen dem Rahmen (1) eines Fahrzeugs und dessen Verkleidung (2) angeordnet zu werden, wobei es mit beiden verbunden ist und dazwischen eine Isolationskammer bildet, **dadurch gekennzeichnet, dass** es umfasst:
- eine Vielzahl von Profilen (6), die zum Verbinden mit der Verkleidung (2) ausgelegt sind und ein Hauptgehäuse (7) und mindestens ein seitliches Gehäuse (8) umfassen, das auf einer Seite des Hauptgehäuses (7) angeordnet ist, und die sich in Längsrichtung zwischen Enden (9) erstrecken;
- eine Vielzahl von Nivellierstützen (10), die höhenverstellbar sind und teilweise in dem Hauptgehäuse (7) der Profile (6) untergebracht und dazu ausgelegt sind, mit dem Rahmen (1) verbunden zu werden, so dass sich die Profile (6) durch Einstellen der Höhe der Nivellierstützen (10) von dem Rahmen (1) weg oder näher zu ihm hin bewegen,
- Verbindungszubehör (11), das teilweise in dem seitlichen Gehäuse (8) eines Profils (6) und teilweise in einem Ende (9) eines anderen Profils (6) untergebracht ist, um beide Profile (6) rechtwinklig zueinander zu verbinden.

2. Montagesystem nach Anspruch 1, **dadurch gekennzeichnet, dass** es mindestens ein Schwingungsdämpfungselement (12) umfasst, das mit den Nivellierstützen (10) verbunden ist und dazu ausgelegt ist, zwischen den Nivellierstützen (10) und dem Profil (6) angeordnet zu werden, und/oder mit den Profilen (6) verbunden ist und dazu ausgelegt ist, zwischen den Profilen (6) und der Abdeckung (2) angeordnet zu werden.

3. Montagesystem nach Anspruch 2, **dadurch gekennzeichnet, dass** das Schwingungsdämpfungselement (12) eine Schicht aus elastomerem Material ist.

4. Montagesystem nach einem der vorhergehenden Ansprüche, **dadurch gekennzeichnet, dass** die Profile (6) mindestens ein oberes Gehäuse (13) umfassen, das auf dem Hauptgehäuse (7) und/oder auf dem mindestens einen seitlichen Gehäuse (8) angeordnet und dazu ausgelegt ist, die Verbindung zwischen dem Profil (6) und der Verkleidung (2) mithilfe von mechanischen Mitteln zu ermöglichen.

5. Montagesystem nach einem der vorhergehenden Ansprüche, **dadurch gekennzeichnet, dass** die Profile (6) Zugangsöffnungen (14) umfassen, die entlang dem Profil (6) angeordnet sind und durch das Profil (6) verlaufen, und die Nivellierstützen (10) in dem Profil (6) in Entsprechung zu den Zugangsöffnungen (14) angeordnet sind.

6. Montagesystem nach einem der vorhergehenden Ansprüche, **dadurch gekennzeichnet, dass** die Nivellierstützen (10) umfassen:
- ein Basisstück (15), das dazu vorgesehen ist, mit dem Fahrzeugrahmen (1) verbunden zu werden und eine Nivellierschraube (16) umfasst;
- eine Platte (17) die beweglich an dem Basisstück (15) mithilfe eines Gewindeeinsatzes (18) und der Nivellierschraube (16) verbunden ist, so dass die Verschiebung in der Längsrichtung der Nivellierschraube (16) erfolgt.

7. Montagesystem nach einem der Ansprüche 2 bis 6, **dadurch gekennzeichnet, dass** das Hauptgehäuse (7) Höhen- und Breitenabmessungen aufweist, die an die Abmessungen der Platte (17) der Nivellierstützen (10) angepasst sind, welche mit den Schwingungsdämpfungselementen (12) verbunden sind.

8. Montagesystem nach einem der vorhergehenden Ansprüche, **dadurch gekennzeichnet, dass** das Profil (6) Längsnuten in den Gehäusen umfasst.

9. Montagesystem nach einem der vorhergehenden Ansprüche, **dadurch gekennzeichnet, dass** die Befestigung des Verbindungszubehörs (11) an den Profilen (6) mithilfe von Schrauben ausgeführt ist.

## Revendications

1. Système d'assemblage configuré pour être agencé entre le bâti (1) d'un véhicule et son revêtement (2), assemblé aux deux, créant entre eux une chambre d'isolation, **caractérisé en ce qu'**il comprend :
une pluralité de profilés (6) configurés pour être assemblés au revêtement (2) et comprenant un boîtier principal (7) et au moins un boîtier latéral (8), agencé sur un côté du boîtier principal (7), qui s'étendent longitudinalement entre les extrémités (9) ;
une pluralité de supports de nivellement (10) qui sont ajustables en hauteur et sont partiellement logés dans le boîtier principal (7) des profilés (6) et configurés pour être assemblés au bâti (1) de sorte que, en ajustant la hauteur desdits supports de nivellement (10), les profilés (6) s'éloignent ou se rapprochent du bâti (1),
des accessoires d'assemblage (11) partiellement logés dans le boîtier latéral (8) d'un profilé (6) et partiellement logés dans une extrémité (9) d'un autre profilé (6) afin d'assembler les deux profilés (6) perpendiculairement entre eux.

2. Système d'assemblage selon la revendication 1, **caractérisé en ce qu'**il comprend au moins un élément anti-vibration (12), assemblé aux supports de nivellement (10) et configuré pour être agencé entre lesdits supports de nivellement (10) et le profilé (6), et/ou assemblé aux profilés (6) et configuré pour être agencé entre lesdits profilés (6) et le revêtement (2).

3. Système d'assemblage selon la revendication 2, **caractérisé en ce que** l'élément anti-vibration (12) est une couche de matériau élastomère.

4. Système d'assemblage selon l'une quelconque des revendications précédentes, **caractérisé en ce que** les profilés (6) comprennent au moins un boîtier supérieur (13) agencé sur le boîtier principal (7) et/ou sur le au moins un boîtier latéral (8), configuré pour permettre le joint entre le profilé (6) et le revêtement (2) par un moyen mécanique.

5. Système d'assemblage selon l'une quelconque des revendications précédentes, **caractérisé en ce que** les profilés (6) comprennent des ouvertures d'accès (14) agencées le long du profilé (6) et qui traversent le profilé (6) et les supports de nivellement (10) sont agencés dans le profilé (6) en correspondance avec lesdites ouvertures d'accès (14).

6. Système d'assemblage selon l'une quelconque des revendications précédentes, **caractérisé en ce que** les supports de nivellement (10) comprennent :
une pièce de base (15) prévue pour être assemblée au bâti de véhicule (1) et comprenant une vis de nivellement (16) ;
une plaque (17) qui est assemblée de manière mobile à la pièce de base (15) au moyen d'un insert fileté (18) et de la vis de nivellement (16) de sorte que le déplacement est réalisé dans la direction longitudinale de la vis de nivellement (16).

7. Système d'assemblage selon l'une quelconque des revendications 2 à 6, **caractérisé en ce que** le boîtier principal (7) a des mesures de hauteur et de largeur adaptées aux mesures de la plaque (17) des supports de nivellement (10) assemblés aux éléments anti-vibration (12).

8. Système d'assemblage selon l'une quelconque des revendications précédentes, **caractérisé en ce que** le profilé (6) comprend des rainures longitudinales dans les boîtiers.

9. Système d'assemblage selon l'une quelconque des revendications précédentes, **caractérisé en ce que** la fixation des accessoires d'assemblage (11) aux profilés (6) est réalisée au moyen de vis.
